# EUROPEAN PATENT APPLICATION

(11) **EP 3 438 068 A1**
(43) Date of publication of application: **06.02.2019**
(21) Application number: 17775395.1
(22) Date of filing: 30.03.2017
(51) Int. Cl.: C03C 27/12, B32B 15/08, B32B 15/082

(54) **INTERLAYER FOR LAMINATED GLASS, LAMINATED GLASS, AND LAMINATED GLASS SYSTEM**

(30) Priority: 31.03.2016 JP 2016073207; 31.03.2016 JP 2016073209
(71) Applicant: Sekisui Chemical Co., Ltd., Osaka-shi, Osaka 530-0047 (JP)
(72) Inventor: NAKAJIMA, Daisuke, Koka-shi Shiga 528-8585 (JP); YAMAMOTO, Masaki, Koka-shi Shiga 528-8585 (JP); NOHARA, Atsushi, Koka-shi Shiga 528-8585 (JP)
(74) Representative: Cabinet Beau de Loménie
(86) International application number: PCT/JP2017/013224
(87) International publication number: WO 2017/170861

(57) **Abstract**

The present invention aims to provide an interlayer film for a laminated glass that has a heating layer and a resin layer stacked on the heating layer, generates heat under application of a voltage and warms frozen glass to melt frost or ice, and is capable of preventing occurrence of corrosion. The present invention can also provide a laminated glass produced using the interlayer film for a laminated glass, and a laminated glass system produced using the laminated glass. Provided is an interlayer film for a laminated glass including: a heating layer; and a first resin layer stacked on a first surface side of the heating layer, the heating layer having a metal oxide layer stacked on at least one surface thereof.

## Description

### TECHNICAL FIELD

The present invention relates to an interlayer film for a laminated glass that includes a heating layer and a resin layer stacked on the heating layer, generates heat under application of a voltage and warms frozen glass to melt frost or ice, and is capable of preventing occurrence of corrosion. The present invention also relates to a laminated glass produced using the interlayer film for a laminated glass and a laminated glass system produced using the laminated glass.

### BACKGROUND ART

Laminated glass is less likely to scatter even when fractured by external impact and can be safely used. Due to this advantage, laminated glass has been widely used for vehicles, buildings, or the like.

In recent years, laminated glass is desired to have various properties. A study is now made on a technique of heating the laminated glass itself, used for a windowpane, to warm the frozen windowpane to melt frost or ice thereon.

As one technique of heating the laminated glass itself, a method of forming a conductive film on a glass surface of the laminated glass to warm the laminated glass by heat derived from resistance upon energization is studied. Such a laminated glass including a conductive film formed thereon is disclosed in, for example, Patent Literature 1.

As a method of heating the laminated glass itself, a method of stacking a heating layer including a conductive film in an interlayer film for a laminated glass is also studied. Such an interlayer film for a laminated glass is typically produced by a method of stacking a resin layer containing a thermoplastic resin such as a polyvinyl acetal on a heating layer. However, an interlayer film for a laminated glass having a heating layer may disadvantageously suffer generation of spot-like contaminants called corrosion, possibly resulting in poor appearance or poor visibility.

### CITATION LIST

### - Patent Literature

Patent Literature 1: JP 2008-222513 A

### SUMMARY OF INVENTION

### - Technical Problem

The present invention aims to, in consideration of the state of the art, provide: an interlayer film for a laminated glass that includes a heating layer and a resin layer stacked on the heating layer, generates heat under application of a voltage and warms frozen glass to melt frost or ice, and is capable of preventing occurrence of corrosion; a laminated glass produced using the interlayer film for a laminated glass; and a laminated glass system produced using the laminated glass.

### - Solution to problem

The present invention relates to an interlayer film for a laminated glass including: a heating layer; and a first resin layer stacked on a first surface side of the heating layer, the heating layer having a metal oxide layer stacked on at least one surface thereof.

The present invention is specifically described in the following.

The present inventors made intensive studies to find a method for preventing occurrence of corrosion in an interlayer film for a laminated glass including a heating layer and a resin layer stacked on a surface of the heating layer. As a result, they found out that providing the heating layer with a metal oxide layer stacked on at least one surface thereof can prevent occurrence of corrosion, thereby completing the present invention.

For sufficient heat generation under application of a voltage, the heating layer used typically has a single-layer or multilayer structure constituted by a metal having a low electrical resistivity such as gold, silver, or copper. In the heating layer constituted by such a metal, agglomeration of the metal is considered to cause corrosion. A metal oxide layer stacked on at least one surface of the heating layer presumably suppresses agglomeration of the metal in the heating layer to prevent occurrence of corrosion.

The interlayer film for a laminated glass of the present invention has a heating layer and a first resin layer stacked on a first surface of the heating layer.

The heating layer generates heat under application of a voltage and warms frozen glass to melt frost or ice.

The heating layer preferably has a surface resistivity of 10 Ω/□ or lower. The heating layer having a surface resistivity of 10 Ω/□ or lower can sufficiently generate heat under application of a voltage and warms frozen glass to melt frost or ice.

The heating layer has a single-layer or multilayer structure constituted by a metal having a low electrical resistivity such as gold, silver, copper, or platinum. The heating layer constituted by such a metal having a low electrical resistivity can sufficiently generate heat under application of a voltage.

The metal having a low electrical resistivity as used herein refers to a metal or alloy having an electrical resistivity of 1 × 10⁻⁶ Ωm or lower, preferably 1 × 10⁻⁷ Ωm or lower. Examples of the metal or alloy having an electrical resistivity of 1 × 10⁻⁷ Ωm or higher but lower than 1 × 10⁻⁶ Ωm include platinum, iron, tin, chromium, lead, titanium, mercury, and stainless steel. Examples of the metal or alloy having an electrical resistivity of lower than 1 × 10⁻⁷ Ωm include gold, silver, copper, aluminum, magnesium, tungsten, cobalt, zinc, nickel, potassium, lithium, and brass.

In particular, the heating layer is preferably constituted by an alloy of at least two metals selected from the group consisting of gold, silver, copper, platinum, palladium, titanium, and nickel. In the case of using such an alloy, occurrence of corrosion can be particularly prevented. Examples of such an alloy include silver-palladium-copper alloy (e.g., APC available from Furuya Metal Co., Ltd.).

The thickness of the heating layer is not particularly limited. The lower limit thereof is preferably 1 nm and the upper limit thereof is preferably 1,000 nm. With the thickness of the heating layer within this range, the heating layer generates heat under application of a voltage and warms frozen glass to melt frost or ice. The lower limit of the thickness of the heating layer is more preferably 5 nm, still more preferably 10 nm, while the upper limit thereof is more preferably 100 nm, still more preferably 50 nm. For further preventing occurrence of corrosion, the lower limit of the thickness of the heating layer is particularly preferably 15 nm, further particularly preferably 20 nm, most preferably 25 nm. In the case where the heating layer has a multilayer structure, the thickness of each layer included in the heating layer is preferably 15 nm or more. Such a structure further ensures prevention of occurrence of corrosion.

The heating layer has a metal oxide layer stacked on at least one surface thereof. The presence of a metal oxide layer stacked on at least one surface of the heating layer enables prevention of corrosion. For a particularly high effect of preventing corrosion, a metal oxide layer is preferably stacked on each surface of the heating layer.

A metal oxide constituting the metal oxide layer is not particularly limited, and preferably includes at least one selected from the group consisting of titanium oxide (TiO₂), niobium oxide (Nb₂O₅), silicon oxide (SiO₂), and zinc oxide (ZnO). In particular, the metal oxide includes more preferably at least one selected from the group consisting of titanium oxide, niobium oxide, and silicon oxide, still more preferably titanium oxide or niobium oxide for a particularly high effect of preventing corrosion.

The above group of the metal oxide preferably excludes tin-doped indium oxide (ITO), antimony-doped tin oxide (ATO), and fluorine-doped tin oxide (FTO) which are exemplified for a transparent conductive layer described later.

The thickness of the metal oxide layer is not particularly limited. The lower limit thereof is preferably 15 nm and the upper limit thereof is preferably 300 nm. With the thickness of the metal oxide within this range, occurrence of corrosion can be surely prevented. The lower limit of the thickness of the metal oxide layer is more preferably 20 nm and the upper limit thereof is more preferably 100 nm. The lower limit is still more preferably 25 nm and the upper limit is still more preferably 80 nm.

The heating layer may have a transparent conductive layer stacked on at least one surface. The transparent conductive layer is constituted by tin-doped indium oxide (ITO), antimony-doped tin oxide (ATO), fluorine-doped tin oxide (FTO) or the like. The presence of such a transparent conductive layer enhances the transparency of an interlayer film for a laminated glass and a laminated glass to be obtained.

The thickness of the transparent conductive layer is not particularly limited. The lower limit is preferably 10 nm and the upper limit thereof is preferably 300 nm. The lower limit of the thickness of the transparent conductive layer is more preferably 15 nm and the upper limit thereof is more preferably 100 nm.

The heating layer may be formed on a substrate. In the case where the heating layer is formed on a substrate, a uniform heating layer can be formed by a sputtering process or the like.

The substrate preferably has a thermal shrinkage measured in conformity with JIS C2151 of 1.0% to 3.5% in both of MD and TD directions after heat treatment at 150°C for 30 minutes. The use of a substrate having such a thermal shrinkage enables formation of a uniform heating layer by a sputtering process or the like and also prevents misalignment between the heating layer and the first surface during the production of a laminated glass due to a difference in the thermal shrinkage, thereby improving the adhesiveness between the heating layer and the first resin layer. The lower limit of the thermal shrinkage is more preferably 1.5% and the upper limit thereof is more preferably 3.0%.

The MD direction (machine direction) as used herein refers to an extrusion direction in the extrusion processing of a substrate into a sheet. The TD direction (transverse direction) refers to a direction perpendicular to the MD direction.

The substrate preferably has a Young's modulus of 1 GPa or more. The use of a substrate having a Young's modulus of 1 GPa or more improves the adhesiveness between the substrate and the first resin layer. The Young's modulus of the substrate is more preferably 1.5 GPa or more, still more preferably 2 GPa or more. The upper limit of the Young's modulus of the substrate is preferably 10 GPa.

The Young's modulus is indicated by a gradient of a straight part of a stress-strain curve obtained by a tensile test in conformity with JIS K7127 at 23°C.

Commonly, the first resin layer or a second resin layer described later each preferably has a Young's modulus of less than 1 GPa.

The substrate preferably contains a thermoplastic resin. Examples of the thermoplastic resin contained in the substrate include chain polyolefins (e.g., polyethylene, polypropylene, poly(4-methylpentene-1), and polyacetal), alicyclic polyolefins (e.g., ring-opening metathesis polymers or addition polymers of norbornenes and addition copolymers of norbornenes and other olefins), biodegradable polymers (e.g., polylactic acid and polybutylsuccinate), polyamides (e.g., Nylon 6, Nylon 11, Nylon 12 and Nylon 66), aramids, polyesters (e.g., polymethyl methacrylate, polyvinyl chloride, polyvinylidene chloride, polystyrene, styrene-copolymerized polymethyl methacrylate, polycarbonate, polypropylene terephthalate, polyethylene terephthalate, polyethylene naphthalate, polybutylene terephthalate, and polyethylene-2,6-naphthalate), polyethersulfone, polyether ether ketone, modified polyphenylene ethers, polyphenylene sulfide, polyetherimide, polyimides, polyarylates, tetrafluoroethylene resins, trifluoroethylene resins, polychlorotrifluoroethylene resins, tetrafluoroethylene-hexafluoropropylene copolymers, and polyvinylidene fluoride. Each of these thermoplastic resins is used alone or in combination of two or more thereof to adjust the thermal shrinkage and Young's modulus each within a predetermined range.

The substrate may contain conventionally known additives such as a UV blocking agent or an antioxidant as needed.

The UV blocking agent used may be a conventionally known UV blocking agent such as a metal UV blocking agent, a metal oxide UV blocking agent, a benzotriazole UV blocking agent, a benzophenone UV blocking agent, a triazine UV blocking agent, a malonic acid ester UV blocking agent, an oxanilide UV blocking agent, and a benzoate UV blocking agent.

The antioxidant used may be a conventionally known antioxidant such as a phenol antioxidant, a sulfur antioxidant, and a phosphor antioxidant.

The thickness of the substrate is not particularly limited. The lower limit thereof is preferably 10 µm and the upper limit thereof is preferably 200 µm. The thickness of the substrate within this range allows formation of a uniform heating layer by a sputtering process or the like and prevents misalignment between the heating layer and the surface of the first resin layer during production of a laminated glass to further enhance the adhesiveness between the heating layer and the first resin layer. The lower limit of the thickness of the substrate is more preferably 20 µm and the upper limit thereof is more preferably 150 µm.

The heating layer may be formed on the substrate by any method, and a conventionally known method such as a sputtering process, ion plating, a plasma CVD process, a vapor deposition process, an application process, or a dipping process may be employed. In particular, a sputtering process is preferred because a uniform heating layer can be formed.

In the case where the heating layer is formed on a substrate, the first resin layer and the substrate preferably have a difference in the thermal shrinkage measured in conformity with JIS C2151 of 10% or less in absolute value in both of MD and TD directions after heat treatment at 150°C for 30 minutes. With the difference in the thermal shrinkage between the first resin layer and the substrate of 10% or less in absolute value, misalignment between the first resin layer and the heating layer during the production of a laminated glass is prevented, so that the adhesiveness between the heating layer and the first resin layer can be further enhanced. The difference in the thermal shrinkage between the first resin layer and the substrate is more preferably 8% or less in absolute value.

The thermal shrinkage of the first resin layer can be adjusted not only by the types of the thermoplastic resins constituting the resin layer and the type or amount of the plasticizer but also by the conditions for annealing treatment.

The first resin layer preferably contains a thermoplastic resin. Examples of the thermoplastic resin include polyvinylidene fluoride, polytetrafluoroethylene, vinylidene fluoride-propylene hexafluoride copolymers, polyethylene trifluoride, acrylonitrile-butadiene-styrene copolymers, polyesters, polyethers, polyamides, polycarbonates, polyacrylates, polymethacrylates, polyvinyl chloride, polyethylene, polypropylene, polystyrene, polyvinyl acetal, and ethylene-vinyl acetate copolymers. In particular, the first resin layer contains preferably a polyvinyl acetal or ethylene-vinyl acetate copolymer, more preferably a polyvinyl acetal.

The polyvinyl acetal is not particularly limited as long as it is obtainable by acetalization of polyvinyl alcohol with an aldehyde. Preferred is polyvinyl butyral. Two or more types of polyvinyl acetal may be used in combination as needed.

The lower limit of the degree of acetalization of the polyvinyl acetal is preferably 40 mol% and the upper limit thereof is preferably 85 mol%. The lower limit is more preferably 60 mol% and the upper limit is more preferably 75 mol%.

The lower limit of the hydroxy group content of the polyvinyl acetal is preferably 15 mol% and the upper limit thereof is preferably 35 mol%. With the hydroxy group content of 15 mol% or more, the adhesiveness between the interlayer film for a laminated glass and glass is improved. With the hydroxy group content of 35 mol% or less, the handleability of the interlayer film for a laminated glass is improved.

The degree of acetalization and the hydroxy group content can be measured in conformity with JIS K6728 "Testing methods for polyvinyl butyral".

The polyvinyl acetal can be prepared by acetalization of polyvinyl alcohol with an aldehyde.

The polyvinyl alcohol can be commonly prepared by saponification of polyvinyl acetate. Polyvinyl alcohol having a degree of saponification of 70 to 99.8 mol% is typically used. The degree of saponification of the polyvinyl alcohol is preferably 80 to 99.8 mol%.

The lower limit of the degree of polymerization of the polyvinyl alcohol is preferably 500 and the upper limit thereof is preferably 4,000. When the degree of polymerization of the polyvinyl alcohol is 500 or more, the laminated glass to be obtained has higher penetration resistance. When the degree of polymerization of the polyvinyl alcohol is 4,000 or less, formation of the interlayer film for a laminated glass is facilitated. The lower limit of the degree of polymerization of the polyvinyl alcohol is more preferably 1,000 and the upper limit thereof is more preferably 3,600.

The aldehyde is not particularly limited. Commonly, a C1-C10 aldehyde is suitably used. The C1-C10 aldehyde is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. In particular, n-butyraldehyde, n-hexylaldehyde, and n-valeraldehyde are preferred, and n-butyraldehyde is more preferred. Each of these aldehydes may be used alone, or two or more thereof may be used in combination.

The first resin layer preferably contains a plasticizer. The plasticizer is not particularly limited, and examples thereof include organic ester plasticizers such as monobasic organic acid esters and polybasic organic acid esters, and phosphoric acid plasticizers such as organophosphate plasticizers and organophosphite plasticizers. The plasticizer is preferably a liquid plasticizer.

The monobasic organic acid esters are not particularly limited, and examples thereof include glycol esters obtained by a reaction between a glycol (e.g., triethylene glycol, tetraethylene glycol, and tripropylene glycol) and a monobasic organic acid (e.g., butyric acid, isobutyric acid, caproic acid, 2-ethylbutyric acid, heptylic acid, n-octylic acid, 2-ethylhexylic acid, pelargonic acid (or n-nonylic acid), and decylic acid). In particular, preferred are triethylene glycol dicaproic acid ester, triethylene glycol-di-2-ethylbutyric acid ester, triethylene glycol-di-n-octylic acid ester, and triethylene glycol-di-2-ethylhexylic acid ester.

The polybasic organic acid esters are not particularly limited, and examples thereof include ester compounds of a polybasic organic acid (e.g., adipic acid, sebacic acid, and azelaic acid) and a C4-C8 linear or branched alcohol. In particular, preferred are dibutyl sebacic acid ester, dioctyl azelaic acid ester, and dibutyl carbitol adipic acid ester.

The organic ester plasticizers are not particularly limited, and examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexylcyclohexyl adipate, diisononyl adipate, heptylnonyl adipate, dibutyl sebacate, oil-modified sebacic alkyds, mixtures of phosphoric acid esters and adipic acid esters, adipic acid esters, mixed type adipic acid esters prepared from C4-C9 alkyl alcohols and C4-C9 cyclic alcohols, and C6-C8 adipic acid esters such as hexyl adipate.

The organophosphate plasticizer is not particularly limited, and examples thereof include tributoxyethyl phosphate, isodecylphenyl phosphate, and triisopropyl phosphate.

For less hydrolysis, the plasticizer contains preferably triethylene glycol di-2-ethylhexanoate (3GO), triethylene glycol di-2-ethylbutyrate (3GH), tetraethylene glycol di-2-ethylhexanoate (4GO), or dihexyl adipate (DHA), more preferably tetraethylene glycol di-2-ethylhexanoate (4GO) or triethylene glycol di-2-ethylhexanoate (3GO), still more preferably triethylene glycol di-2-ethylhexanoate.

The amount of the plasticizer in the first resin layer is not particularly limited. The lower limit thereof is preferably 30 parts by weight and the upper limit thereof is preferably 90 parts by weight based on 100 parts by weight of the polyvinyl acetal. When the amount of the plasticizer is 30 parts by weight or more, the interlayer film for laminated glass has a lower melt viscosity, improving the deaeration properties in the production of a laminated glass. When the amount of the plasticizer is 90 parts by weight or less, the transparency of the interlayer film for a laminated glass is improved. The lower limit of the amount of the plasticizer is more preferably 35 parts by weight and the upper limit thereof is more preferably 70 parts by weight, still more preferably 63 parts by weight.

The first resin layer preferably contains an adhesion modifier. The adhesion modifier contained adjusts the adhesion force to glass, resulting in production of a laminated glass excellent in penetration resistance.

The adhesion modifier used is suitably, for example, an alkali metal salt or an alkaline earth metal salt. Examples of the adhesion modifier include salts of potassium, sodium, magnesium, and the like.

Examples of an acid constituting the salts include organic acids such as carboxylic acids (e.g., octylic acid, hexylic acid, 2-ethylbutyric acid, butyric acid, acetic acid, formic acid) and inorganic acids such as hydrochloric acid and nitric acid.

In the case where the interlayer film for a laminated glass of the present invention is required to have heat insulation properties, the first resin layer may contain a heat-ray absorbent.

The heat-ray absorbent is not particularly limited as long as it can block infrared rays. Preferred is at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

The first resin layer may contain conventionally known additives such as an UV blocking agent, an antioxidant, a light stabilizer, and an antistatic agent, as needed.

The thickness of the first resin layer is not particularly limited. The lower limit is preferably 100 µm and the upper limit is preferably 500 µm. With the thickness of the first resin layer within this range, sufficient durability can be achieved and the laminated glass to be obtained has satisfactory basic properties such as transparency and penetration resistance. The lower limit of the thickness of the first resin layer is more preferably 200 µm and the upper limit thereof is more preferably 400 µm.

The interlayer film for a laminated glass of the present invention preferably further has a second resin layer stacked on a second surface side of the heating layer. The second surface side is opposite to the first surface side. The presence of such a second resin layer can further improve the adhesion to glass.

The second resin layer may be one similar to the first resin layer. The second resin layer may be the same as or different from the first resin layer.

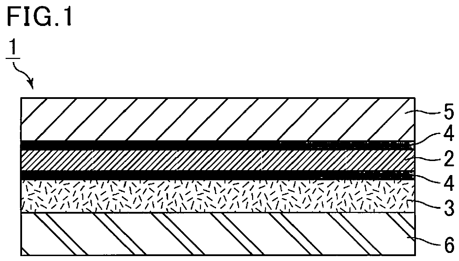

Fig. 1 shows a schematic view of an exemplary cross section in the thickness direction of the interlayer film for a laminated glass of the present invention. In Fig. 1, an interlayer film for a laminated glass 1 includes a heating layer 2 formed on a substrate 3, a metal oxide layer 4 stacked on each surface of the heating layer 2, a first resin layer 5 stacked on a first surface side of the heating layer 2, and a second resin layer 6 stacked on a second surface side of the heating layer 2.

The interlayer film for a laminated glass of the present invention may be produced by any method. Preferably, the first resin layer, the heating layer, and optionally the second resin layer are stacked in the stated order, and the obtained laminate is thermal compression bonded. In particular, a so-called roll-to-roll method is preferred in which the layers are unwounded from rolls prepared by individually winding the layers and stacked to provide a laminate, the laminate is thermal compression bonded by being passed between heated press rolls to provide an interlayer film for a laminated glass, and the interlayer film for a laminated glass is wound into a roll.

The present invention also encompasses a laminated glass including a pair of glass plates and the interlayer film for a laminated glass of the present invention interposed between the pair of glass plates.

The glass plates may be commonly used transparent glass plates. Examples thereof include inorganic glass plates such as float glass plates, polished glass plates, figured glass plates, meshed glass plates, wired glass plates, colored glass plates, heat-absorbing glass plates, heat-reflecting glass plates, and green glass plates. A UV-blocking glass plate having a UV-blocking layer on a glass surface may also be used. Other examples of the glass plates include organic plastic plates made of polyethylene terephthalate, polycarbonate, polyacrylate, or the like.

The glass plates may include two or more types of glass plates. For example, the laminated glass may be a laminated glass including the interlayer film for a laminated glass of the present invention between a transparent float glass plate and a colored glass plate such as a green glass plate. The glass plates may include two or more glass plates with different thicknesses.

The laminated glass of the present invention may be produced by any method, and a conventionally known method may be employed.

The present invention also encompasses a laminated glass system including the laminated glass of the present invention and a voltage supply part for applying a voltage to the heating layer in the interlayer film for a laminated glass in the laminated glass.

### - Advantageous Effects of Invention

The present invention can provide an interlayer film for a laminated glass that includes a heating layer and a resin layer stacked on the heating layer, generates heat under application of a voltage and warms frozen glass to melt frost or ice, and is capable of preventing occurrence of corrosion. The present invention can also provide a laminated glass produced using the interlayer film for a laminated glass, and a laminated glass system produced using the laminated glass.

### BRIEF DESCRIPTION OF DRAWINGS

Fig. 1 is a schematic view showing an exemplary cross section in the thickness direction of the interlayer film for a laminated glass of the present invention.

### DESCRIPTION OF EMBODIMENTS

Embodiments of the present invention are specifically described in the following with reference to, but not limited to, examples.

### (Example 1)

### (1) Preparation of heating layer

A polyethylene terephthalate (PET) film with a thickness of 50 µm was used as a substrate. On the substrate was formed a niobium oxide layer with a thickness of 50 nm by sputtering with use of niobium oxide as a target under the conditions of the sputtering power of a 1,000 W direct current (DC), the atmospheric gas of argon, the gas flow rate of 50 seem, and the sputtering pressure of 0.5 Pa.

Next, on the niobium oxide layer was formed a silver heating layer with a thickness of 10 nm by sputtering with use of silver as a target under the conditions of the sputtering power of a 1,000 W direct current (DC), the atmospheric gas of argon, the gas flow rate of 50 seem, and the sputtering pressure of 0.5 Pa.

Further, on the heating layer was formed a niobium oxide layer with a thickness of 50 nm by sputtering with use of niobium oxide as a target under the conditions of the sputtering power of a 1,000 W direct current (DC), the atmospheric gas of argon, the gas flow rate of 50 seem, and the sputtering pressure of 0.5 Pa.

### (2) Preparation of resin layer

To 100 parts by weight of polyvinyl butyral (hydroxy group content of 30 mol%, degree of acetylation of 1 mol%, degree of butyralization of 69 mol%, average degree of polymerization of 1,700) were added 40 parts by weight of triethylene glycol di-2-ethylhexanoate (3GO) as a plasticizer, 0.5 parts by weight of 2-(2'-hydroxy-3'-t-butyl-5-methylphenyl)-5-chlorobenzotriazole ("Tinuvin 326" available from BASF SE) as a UV blocking agent, and 0.5 parts by weight of 2,6-di-t-butyl-p-cresol (BHT) as an antioxidant. They were sufficiently kneaded with a mixing roll to prepare a composition. The obtained composition was extruded from an extruder to provide a single-layer resin film of polyvinyl butyral (PVB) with a thickness of 380 µm.

### (3) Production of interlayer film for a laminated glass

Two sheets of the resin film were prepared, and a substrate on which a heating layer and niobium oxide layers were formed was sandwiched between the two resin films. The laminate was thermal compression bonded to produce an interlayer film for a laminated glass having a laminated structure (first resin layer/niobium oxide layer/heating layer/niobium oxide layer/substrate/second resin layer). The thermal compression bonding was performed by a roll-to-roll method using a thermal compression bonding laminator ("MRK-650Y type" available from MCK Co., Ltd.) under the conditions of a heating temperature of 75°C, a bonding pressure of 1.0 kN, and a feed tension of 20 N. Laminating rolls used for the thermal compression bonding had upper and lower rolls both formed of rubber.

### (Examples 2 and 3)

Interlayer films for a laminated glass were produced in the same manner as in Example 1, except that niobium oxide was changed to titanium oxide or silicon oxide.

### (Examples 4 to 6)

Interlayer films for a laminated glass were produced respectively in the same manner as in Examples 1 to 3, except that sputtering was performed with use of APC (silver-palladium-copper alloy), in place of Ag, as a target to form an APC heating layer with a thickness of 10 nm and the thickness of the metal oxide layer was changed.

### (Comparative Examples 1 and 2)

Interlayer films for a laminated glass were produced respectively in the same manner as in Examples 1 and 4, except that the metal oxide layer was not formed.

### (Example 7)

The substrate used was a polyethylene terephthalate (PET) film with a thickness of 50 µm. On the substrate was formed a titanium oxide layer with a thickness of 80 nm by sputtering with use of titanium dioxide (TiO₂) as a target under the conditions of the sputtering power of a 1,000 W direct current (DC), the atmospheric gas of argon, the gas flow rate of 50 seem, and the sputtering pressure of 0.5 Pa.

Next, on the titanium oxide layer was formed a silver heating layer with a thickness of 25 nm by sputtering with use of silver as a target under the conditions of the sputtering power of a 1,000 W direct current (DC), the atmospheric gas of argon, the gas flow rate of 50 seem, and the sputtering pressure of 0.5 Pa.

Further, on the heating layer was formed a titanium oxide layer with a thickness of 80 nm by sputtering with use of titanium dioxide (TiO₂) as a target under the conditions of the sputtering power of a 1,000 W direct current (DC), the atmospheric gas of argon, the gas flow rate of 50 seem, and the sputtering pressure of 0.5 Pa.

An interlayer film for a laminated glass having a laminated structure (first resin layer/titanium oxide layer/heating layer/titanium oxide layer/substrate/second resin layer) was produced in the same manner as in Example 1, except that the obtained substrate with a titanium oxide layer, a heating layer, and a titanium oxide layer formed thereon was used.

### (Evaluation)

The interlayer films for a laminated glass obtained in the examples and comparative examples were evaluated by the following methods.

Table 1 shows the results.
(1) Evaluation of heat generation properties (temperature attained by heat generation, planar heat generation properties and high-temperature heat generation properties)

To each end of the obtained laminated glass was attached a single-sided copper foil tape STS-CU42S (Sekisui Techno Shoji Nishi Nihon Co., Ltd.) as an electrode. A DC 12 V/4.2 A power source (S8JX-N05012DC available from OMRON Corporation) and the electrodes were connected using an alligator cable.

A 12 V voltage was applied to the laminated glass at 25°C for seven minutes. The temperature (surface temperature) attained by heat generation at a central portion of the laminated glass surface after the seven minutes voltage application was measured using a contact-type thermometer. Here, the temperature attained by heat generation of X°C refers to a temperature increase of X°C on the basis of 25°C before application of a voltage. For example, when the temperature attained by heat generation is 20°C, the temperature of the laminated glass is 45°C. Further, the difference in the surface temperature between the vicinity of an end portion (1 cm inside the end portion) and the central portion of the laminated glass was obtained. The planar heat generation properties and high-temperature heat generation properties were evaluated based on the following criteria.

### [Evaluation criteria of planar heat generation properties and high-temperature heat generation properties]

o (Good): The temperature increased uniformly throughout from the vicinity of the end portion to the central portion of the laminated glass (difference in temperature between the vicinity of the end portion and the central portion after the temperature increase was 4°C or lower) and the temperature attained by heat generation was 20°C or higher. Δ (Average): The temperature increased uniformly throughout from the vicinity of the end portion to the central portion of the laminated glass (difference in temperature between the vicinity of the end portion and the central portion after the temperature increase was 4°C or lower) and the temperature attained by heat generation was lower than 20°C.

× (Poor): The temperature did not increase or the temperature increase was not uniform between the end portion and the central portion of the laminated glass (difference in temperature between the vicinity of the end portion and the central portion after the temperature increase was higher than 4°C).

### (2) Evaluation of occurrence of corrosion

The obtained interlayer film for a laminated glass was cut into a piece of 30 cm in length × 30 cm in width. Separately, two clear glass plates (30 cm in length × 30 cm in width × 2.5 mm in thickness) were prepared. The obtained interlayer film piece was sandwiched between the two clear glass plates, and held in a vacuum laminator at 90°C for 30 minutes to be vacuum pressed. Thus, a laminate was obtained. The interlayer film part protruding from the glass plates of the laminate was cut, thereby preparing a laminated glass. The obtained laminated glass was subjected to evaluation of corrosion using a thermohygrostat oven (ESPEC Corp.) under the conditions of 80°C and 90% RH.

The obtained laminated glass was placed in the oven, and its appearance after a lapse of every predetermined time period was visually checked. In this evaluation, the interlayer film for a laminated glass was observed a day later, 7 days later, and 14 days later.

○ (Good): No defective appearance (no spot-like pattern due to agglomeration)

× (Poor): Defective appearance (spot-like pattern due to agglomeration present)

**[Table 1]**

| | | | Example 1 | Example 2 | Example 3 | Example 4 | Example 5 | Example 6 | Example 7 | Comparative Example 1 | Comparative Example 2 |
|---|---|---|---|---|---|---|---|---|---|---|---|
| Interlayer film for a laminated glass | First resin layer | | PVB | PVB | PVB | PVB | PVB | PVB | PVB | PVB | PVB |
| | Metal oxide layer | Type | Nb₂O₅ | TiO₂ | SiO₂ | Nb₂O₅ | TiO₂ | SiO₂ | TiO₂ | - | - |
| | | Thickness (nm) | 50 | 50 | 50 | 70 | 70 | 70 | 80 | - | - |
| | Heating layer | Type | Ag | Ag | Ag | APC | APC | APC | Ag | Ag | APC |
| | | Thickness (nm) | 10 | 10 | 10 | 10 | 10 | 10 | 25 | 10 | 10 |
| | Metal oxide layer | Type | Nb₂O₅ | TiO₂ | SiO₂ | Nb₂O₅ | TiO₂ | SiO₂ | TiO₂ | - | - |
| | | Thickness (nm) | 50 | 50 | 50 | 70 | 70 | 70 | 80 | - | - |
| | Substrate | | PET | PET | PET | PET | PET | PET | PET | PET | PET |
| | Second resin layer | | PVB | PVB | PVB | PVB | PVB | PVB | PVB | PVB | PVB |
| Evaluation | Heat generation properties | | ○ | ○ | ○ | ○ | ○ | ○ | ○ | ○ | ○ |
| | Corrosion | 1 day later | ○ | ○ | ○ | ○ | ○ | ○ | ○ | × | × |
| | | 7 days later | ○ | ○ | ○ | ○ | ○ | ○ | ○ | × | × |
| | | 14 days later | ○ | ○ | ○ | ○ | ○ | ○ | ○ | × | × |

### INDUSTRIAL APPLICABILITY

The present invention can provide an interlayer film for a laminated glass that has a heating layer and a resin layer stacked on the heating layer, generates heat under application of a voltage and warms frozen glass to melt frost or ice, and is capable of preventing occurrence of corrosion. The present invention can also provide a laminated glass produced using the interlayer film for a laminated glass, and a laminated glass system produced using the laminated glass.

### REFERENCE SIGNS LIST

1 Interlayer film for a laminated glass
2 Heating layer
3 Substrate
4 Metal oxide layer
5 First resin layer
6 Second resin layer

## Claims

1. An interlayer film for a laminated glass comprising:
a heating layer; and
a first resin layer stacked on a first surface side of the heating layer,
the heating layer having a metal oxide layer stacked on at least one surface thereof.

2. The interlayer film for a laminated glass according to claim 1,
wherein the heating layer comprises an alloy containing at least two metals selected from the group consisting of gold, silver, copper, platinum, palladium, titanium, and nickel.

3. The interlayer film for a laminated glass according to claim 1 or 2,
wherein the heating layer has a surface resistivity of 10 Ω/□ or lower.

4. The interlayer film for a laminated glass according to claim 1, 2, or 3,
wherein the metal oxide layer comprises at least one selected from the group consisting of titanium oxide, niobium oxide, silicon oxide, and zinc oxide.

5. The interlayer film for a laminated glass according to claim 4,
wherein the metal oxide layer comprises at least one selected from the group consisting of titanium oxide, niobium oxide, and silicon oxide.

6. The interlayer film for a laminated glass according to claim 5,
wherein the metal oxide layer comprises titanium oxide or niobium oxide.

7. The interlayer film for a laminated glass according to claim 1, 2, 3, 4, 5, or 6,
wherein the first resin layer contains a thermoplastic resin.

8. The interlayer film for a laminated glass according to claim 7,
wherein the thermoplastic resin is a polyvinyl acetal.

9. The interlayer film for a laminated glass according to claim 1, 2, 3, 4, 5, 6, 7, or 8,
wherein the first resin layer contains a plasticizer.

10. The interlayer film for a laminated glass according to claim 1, 2, 3, 4, 5, 6, 7, 8, or 9,
wherein the first resin layer contains an alkali metal salt or an alkaline earth metal salt.

11. The interlayer film for a laminated glass according to claim 1, 2, 3, 4, 5, 6, 7, 8, 9, or 10,
wherein the first resin layer contains a heat-ray absorbent.

12. The interlayer film for a laminated glass according to claim 1, 2, 3, 4, 5, 6, 7, 8, 9, 10, or 11, further comprising a second resin layer stacked on a second surface side, an opposite side of the first surface side, of the heating layer.

13. A laminated glass comprising:
a pair of glass plates; and
the interlayer film for a laminated glass according to claim 1, 2, 3, 4, 5, 6, 7, 8, 9, 10, 11, or 12 interposed between the pair of glass plates.

14. A laminated glass system comprising:
the laminated glass according to claim 13; and a voltage supply part for applying a voltage to the heating layer in the interlayer film for a laminated glass of the laminated glass.
